Europäisches Patentamt

European Patent Office

Office européen des brevets

(19)

(11) veröffentlichungsnummer: **0 016 244**

**A1**

(12) # EUROPÄISCHE PATENTANMELDUNG

(21) Anmeldenummer: **79103752.6**

(22) Anmeldetag: **02.10.79**

(51) Int. Cl.³: **F 01 P 3/20**
     **F 28 F 23/00**

(30) Priorität: 24.02.79 DE 2907353

(43) Veröffentlichungstag der Anmeldung:
     01.10.80 Patentblatt 80/20

(84) Benannte Vertragsstaaten:
     DE FR GB IT SE

(71) Anmelder: **ROBERT BOSCH GMBH**
     **Postfach 50**
     **D-7000 Stuttgart 1(DE)**

(72) Erfinder: **Imhof, Ernst**
     **Danziger Strasse 3/1**
     **D-7015 Münchingen(DE)**

(72) Erfinder: **Schmid, Günter**
     **Fleischhauerstrasse 10**
     **D-7000 Stuttgart 80(DE)**

(54) **Kühlkreislauf für flüssigkeitsgekühlte Verbrennungskraftmaschine und Verfahren zur Kühlung derselben.**

(57) Es wird eine flüssigkeitsgekühlte Verbrennungskraftmaschine und ein Verfahren zur Kühlung derselben vorgeschlagen, bei welcher als Kühlmittel ein als Wärmespeichermittel geeignete unterkühlbare Substanz, insbesondere Natrium-Acetat-Trihydrat Verwendung findet. Durch gezielte Abgabe der Schmelzwärme des unterkühlten Wärmespeichermittels findet eine Vorwärmung des Motors (1) statt. Durch spezielle Anordnung von zusätzlichen Ventilen (2, 3, 4) wird erreicht, daß der übliche Kühlkreislauf erst dann entsteht, wenn das Wärmespeichermittel durch die Motorabwärme wieder vollständig verflüssigt ist. Danach findet ein üblicher Kühlkreislauf statt.

EP 0 016 244 A1

./...

R. **5325**

Ot/Jä 22.1.1979

Robert Bosch GmbH, 7000 Stuttgart

Verbrennungskraftmaschine mit Flüssigkeitskühlung

Stand der Technik

Die Erfindung geht aus von einer Verbrennungskraftmaschine
mit Flüssigkeitskühlung nach der Gattung des Hauptanspruchs.
Die in Verbrennungskraftmaschine, im weiteren auch Motor
genannt, an die Brennraumwände abgegebene Wärme muß durch
Luft- oder Wasserkühlung an die Umgebungsluft abgeführt
werden. Bei Wasserkühlung wird die Verlustwärme durch
Wasser aus dem Motor abgeführt und das Wasser im Kühler
zurückgekühlt. Dies geschieht im allgemeinen durch eine
Pumpenumlaufkühlung. Um Einfrieren des Kühlwassers zu
verhindern, setzt man Gefrierschutzmittel zu. Es sind
wasserlösliche Flüssigkeiten, meist auf Glykol-Grundlage (z.B. Äthylenglykol), mit Zusätzen zur Verhinderung von
Korrosion und Schaumbildung. Die Lage des Erstarrungspunktes hängt vom Mischungsverhältnis mit Wasser ab.
Das im Kühlkreislauf des Motors umlaufende Kühlmittel
soll nach dem Start möglichst schnell die Betriebstemperatur erreichen. Erst bei richtiger Motortemperatur
sind optimale Bedingungen hinsichtlich der Abgasemission,
des Kraftstoffverbrauches, des Verschleißes usw. gegeben.
Die Start- und Warmlaufphase sollte deshalb so kurz wie
möglich gehalten werden. Dies wird im allgemeinen durch
eine Kühlwasserregelung bewerkstelligt, nach welcher
das Kühlmittel erst dann durch den Kühler gepumpt wird,
wenn es im Motor ausreichend erwärmt ist. Dies geschieht
im allgemeinen durch eine thermostatische Kühlmittelregelung.

Um die Start- und Warmlaufphase des Motors zu verkürzen,
wurde schon vorgeschlagen, zur Motorvorwärmung große
bzw. alle Teile des Motors vorzuwärmen. Dies erfordert
jedoch einen hohen Energieaufwand und lange Vorwärmzeiten und ist darüber hinaus sehr unwirtschaftlich.

Vorteile der Erfindung

Die erfindungsgemäße Anordnung mit den kennzeichnenden
Merkmalen des Hauptanspruchs hat demgegenüber den Vorteil, daß eine Motorvorwärmung sowohl die Startschwierigkeiten als auch den in der Warmlaufphase auftretenden
extrem hohen Verschleiß weitgehend vermeidet. Durch Verwendung einer Substanz als Kühlmittel, welche auch als
unterkühlbare Latentwärmespeichersubstanz dienen kann,
wird sowohl eine Wärmespeicherfunktion als auch eine
Kühlmittelfunktion erfüllt. Bei der Speicherung wird
die Unterkühlbarkeit der Substanz genutzt. Die in latenter Form gespeicherte Motorabwärme wird vor dem Kaltstart freigesetzt, um den Motor oder Teile desselben so vorzuwärmen, daß beim Anlassen und in der Warmlaufphase die Gemischanreicherung reduziert werden kann. Dies bedeutet insbesondere eine Kraftstoffersparnis, eine Verminderung der Schadstoffemission im Abgas sowie eine Verschleißminderung.

Die Aufladung des Latentwärmespeichers, dessen Substanz als Kühlmittel benutzt wird, geschieht dabei auf einfachste Weise durch die Motorabwärme. Dies hat den Vorteil, daß auch für die Entladung des Latentwärmespeichers, also für den Wärmerücktransport an den Motor, das gleiche Medium (Kühlwasser) benutzt werden kann wie für die Ladung. Bei der Nutzung der Abwärme aus dem Abgas wäre nicht nur ein zweiter Wärmeträger, sondern auch ein Mehraufwand für Apparate, Regelung und Betriebssicherheit erforderlich.

Für die erfindungsgemäße Anordnung werden zusammenfassend vor allem folgende Vorteile erzielt:

- die Speicherung der Motorabwärme für den Einsatz beim Kaltstart geschieht ohne Anwendung einer aufwendigen Wärmeisolation
- bei tiefen Außentemperaturen kann praktisch eine beliebig lange Speicherung der Abwärme ohne Energieverlust stattfinden
- es besteht kein Bedarf eines Frostschutzmittels im Winter; bei Temperaturen unter -15 $^\circ$ C muß lediglich der Wasserzusatz von z.B. 15 auf 20 Gew.-% erhöht werden
- das notwendige Anlasserdrehmoment beim Starten im Winter wird vermindert, wodurch sich eine bessere Ausnutzung der Akkukapazität ergibt

- 4 -

- durch geringeren Benzinverbrauch vor allem im Winter
  und bei Fahrzeugen mit überwiegendem Kurzstreckenverkehr und vielen Kaltstarts wird die Wirtschaftlichkeit
  erhöht
- geringere HC- und CO-Emissionen im Abgas beim Kaltstart
- geringerer Kaltstartverschleiß.

Durch die in den Unteransprüchen aufgeführten Maßnahmen
ist eine vorteilhafte Weiterbildung und Verbesserung der
im Hauptanspruch angegebenen Anordnung möglich. Besonders
vorteilhaft scheint die Anordnung der Elektro-Ventile
unmittelbar in Motornähe. Hierdurch wird erreicht, daß
die Entladung des als Latentwärmespeicher dienenden
Kühlmittels sich nur im Motor selbst vollzieht. Dadurch
wird vermieden, daß Kühlmittel in nicht ausheizbaren
Aggregaten, wie z.B. dem Kühler, auskristallisiert. Die
Erwärmung des auskristallisierten Wärmespeichermittels
(Ladevorgang) soll ausschließlich im Motorgehäuse selbst
stattfinden.

Vorteilhaft erscheint weiterhin die Anordnung einer
Impfeinrichtung am Motorgehäuse. Hierdurch wird gewährleistet, daß der Wärmespeicher (Kühlmittel) seine im
unterkühlten Zustand enthaltene Schmelzwärme zu einem
abrufbaren Zeitpunkt an den Motor abgibt.

Besonders vorteilhaft erscheint auch die Verwendung
von Natrium-Acetat-Trihydrat mit ca. 10 bis 25 Gew.-%
Wasser als Kühl- und Wärmespeichermittel. Bei dieser
Substanz liegt eine hohe Kristallisationsgeschwindigkeit
und damit eine schnelle Wärmeabgabe des Speichermittels
vor. Vorteilhaft erscheint weiterhin die durch Wasserzugabe erzielte Rührbarkeit des Gemisches, d.h. es entsteht kein fester Block bei der Rekristallisation.

- 5 -

## Zeichnung

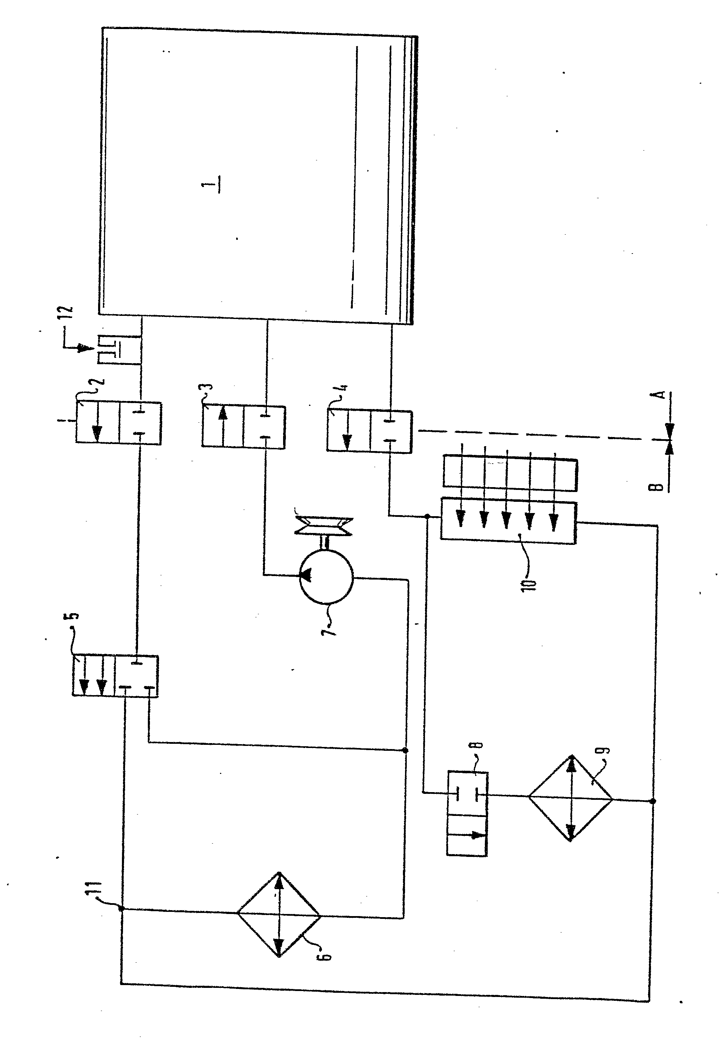

Ein Ausführungsbeispiel der Erfindung ist in der Zeichnung
dargestellt und in der nachfolgenden Beschreibung näher
erläutert. Es zeigt die Figur eine schematische Darstellung
des Kühlkreislaufes bei einem Motor.

## Beschreibung der Erfindung

Das Kühlungs- und Abwärmespeicherungssystem bei einer
Verbrennungskraftmaschine (z.B. Kfz-Motor) ist wie folgt
aufgebaut: Dem Motor 1 sind drei Elektro-Ventile 2, 3, 4
vorgeschaltet. Der Hauptkühlkreislauf erfolgt über das
Vorlaufventil 2 über den Kühlmittelregler (Thermostat) 5,
über den Kühler 6, der Kühlmittelpumpe 7 und dem Rücklaufventil 3. Je nach Temperatur des Kühlmittels wird
dieses mit Hilfe des Kühlmittelreglers durch den Kühler 6
geleitet oder gelangt direkt zurück zum Motor.

In einem Nebenkühlkreislauf erfolgt die Erwärmung z.B. des
Kfz-Innenraums sowie die sonstige notwendige Erwärmung
von Aggregaten. Der Nebenkühlkreislauf wird gebildet
durch das Elektro-Ventil 4, das mechanische Heizungs-
Regulierungsventil 8 und dem Heizungswärmetauscher 9.
Als sonstiges Aggregat ist beispielsweise ein Saugrohr 10
dargestellt, welches ebenfalls vorgewärmt werden kann.
Der Nebenkühlkreislauf wird wie der Hauptkühlkreislauf
durch die Kühlmittelpumpe 7 betätigt. Dies kann beispielsweise durch einen Leitungsanschluß 11 im Leitungsbereich
zwischen dem Kühler 6 und der Kühlmittelpumpe 7 im Hauptkühlmittelkreislauf geschehen.

Die Wirkungsweise des Motors mit Kühlung und Abwärmespeicherung ist folgende: Durch Verwendung von Natrium-
Acetat-Trihydrat mit z.B. 15 Gew.-% Wasser anstelle eines

- 6 -

sonst üblichen Wasserglykolgemisches wird das Kühlmittel weiterhin als Wärmespeichermittel verwendet. Durch Wasserzusatz wird folgendes erreicht:

- Der Schmelzpunkt des reinen Trihydrats wird von +58° C auf +49° C gesenkt; hierdurch erfolgt eine schnelle thermische Wiederaufladung des Wärmespeichermediums.
- Die Unterkühlbarkeit des Kühlmittels auf tiefere Temperaturen wird durch Wasserzusatz möglich. Bei reinem Trihydrat setzt die spontane Kristallisation und damit die Freigabe der latenten Wärme schon zwischen +2,5 und -12,5° C ein. Bei einer Zugabe von z.B. 15 Gew.-% Wasser geschieht dies erst bei einer Temperatur zwischen -14 und -18° C.
- Durch Wasserzusatz wird weiterhin erreicht, daß nach der Kristallisation kein fester Block, sondern eine rührbare Masse entsteht. Die Beweglichkeit der Kristalle bleibt erhalten und der Motor wird keinen gefährlichen Erstarrungskräften ausgesetzt.

Der gesamte Kühlkreislauf des Motors ist in zwei Bereiche aufgeteilt. Der Schmelzbereich A (der eigentliche Motor) ist durch drei in Motornähe angeordnete Elektro-Ventile 2, 3, 4 hermetisch gegenüber dem übrigen Kreislauf und der Umgebung abdichtbar und mit einem internen Expansionsvolumen gegen Überdruckschäden gesichert. Nur in diesem Bereich findet der Schmelzvorgang bzw. Auskristallisationsvorgang und damit die Latentwärmespeicherung und Wärmeabgabe statt. Die Ventile 2, 3, 4 werden zweckmäßigerweise derart am Motor angeordnet, daß sie durch die Motorabwärme auf eine Temperatur über den Schmelzpunkt aufgeheizt werden können. Hierdurch wird gewährleistet, daß keine Restkristalle in den Ventilen verbleiben und eventuell eine "Fehlzündung" auslösen. Der übrige Kühlkreislauf B ist der Bereich in dem sich alle übrigen,
dem Kühlsystem angehörigen Aggregate, befinden. In diesem
Bereich findet keine Kristallisation des unterkühlten
Kühlmittels statt. Die Verbindung zwischen dem Bereich
A und B wird erst dann freigegeben, wenn das im Motor
(Bereich A) auskristallisierte Kühlmittel durch die
Motorabwärme wieder vollständig aufgeschmolzen wurde,
d.h. das Kühlmittel vollständig flüssig und die thermische
Aufladung vollzogen ist. Dies kann z.B. bei der Motorbetriebstemperatur geschehen.

Die Unterkühlbarkeit des Kühlmittels wird in beiden
Bereichen A und B genutzt. Dies hat zur Folge, daß auch
dann, wenn die Temperatur der Lösung weit unter ihren
Schmelzpunkt gesunken ist, sich der Aggregatzustand des
Stoffes nicht ändert und die Lösung flüssig bleibt. Dieser
physikalisch metastabile Zustand kann unter Einhaltung
bestimmter Bedingungen, z.B. luftdichte Abdichtung zur
Umgebung stabilisiert werden. Der Schmelzbereich B
(Kühler und Aggregate) wird zweckmäßigerweise durch Versiegelung so ausgebildet, daß er nicht "unfachmännisch"
geöffnet werden kann; es könnte sonst im unterkühlten
Zustand des Speichermittels eine unabsichtliche "Zündung" der Speichersubstanz im Schmelzbereich B erfolgen.

Die Freigabe der im Natrium-Acetat-Trihydrat-Gemisch gespeicherten latenten Wärme im Bereich A wird durch eine
isomorphe Impfung bewirkt. Dies geschieht durch Beigabe
eines "Keims" der gleichen Substanz, nämlich des Natrium-
Acetats-Trihydrats. Dieser "Keim" in Form eines Kristallits
(dessen Masse nicht größer als $10^{-21}$ Gramm sein muß) vermittelt der metastabilen Lösung die nötige Information
über den Aufbau des Kristallgitters und bewirkt das Auskristallisieren.

0016244

Folgende Zustände werden mit dem erfindungsgemäßen
Motor erreicht:

1. Kaltstart (Entladung des Wärmespeichermittels): Das unterkühlte (< +49° C) Wärmespeichermittel bzw. Kühlmittel
wird bei geschlossenen Elektro-Ventilen 2, 3, 4 durch
eine Impfung über die "Zündeinrichtung" 12 zur Kristallisation gebracht. Die hierbei entstehende nutzbare Schmelzwärme (≈52 Wh/Kg) wird an den Motor abgegeben und erwärmt
diesen. Das Wärmespeichermittel (Kühlmittel) erwärmt sich
dabei auf die Schmelztemperatur (+49° C).

2. Startvorgang (Ladevorgang): Die durch den Kristallisation
vorgang entstehende "feste Phase" stellt eine rührbare
Masse dar, die bei laufendem Motor durch die Motorabwärme
wieder verflüssigt wird. Erst wenn das Wärmespeichermittel
vollständig verflüssigt ist, werden die Elektro-Ventile
geöffnet, um den normalen Kühlkreislauf herzustellen. Die
Steuerung der Öffnung der Elektro-Ventile 2 - 4 kann über
einen Thermofühler, welcher im Motor angeordnet ist, geschehen. Dies kann z.B. bei einer Kühlmitteltemperatur
von ca. 70° C im Motor oder auch bei der Motorbetriebstemperatur geschehen, um zu vermeiden, daß Restkristalle
vorhanden sind, um somit ein Durchzünden (Auskristallisieren) in den Bereich B zu vermeiden.

3. Stillstand: Bei abgeschaltetem Motor sinkt die Temperatur des Kühlmittels unterhalb des Schmelzpunktes
(+49° C) bis auf Umgebungstemperatur des Motors ab. Durch
die Unterkühlbarkeit bleibt das Kühlmittel trotz Unterschreitung des Schmelzpunktes flüssig und die gespeicherte
Schmelzwärme bleibt im Kühlmittel als Wärmespeicher bis
zum Abruf erhalten.

Die Erfindung kann bei allen Verbrennungskraftmaschinen
Verwendung finden. Besonders vorteilhaft erscheint die

- 9 -

Verwendung bei KFZ-Motoren. Eine Verwendung ist jedoch
auch bei stationären Motoren, z.B. Notstromaggegraten,
möglich.

R. 5325

Ot/Jä 22.1.1979


Robert Bosch GmbH, 7000 Stuttgart


Ansprüche


1. Verbrennungskraftmaschine mit Flüssigkeitskühlung, mit einem Kühler, einer Kühlmittelpumpe sowie Regelorganen, dadurch gekennzeichnet, daß eine für Latentwärmespeicher geeignete unterkühlbare Substanz als Kühlmittel und Wärmespeichermittel Verwendung findet.


2. Verbrennungskraftmaschine nach Anspruch 1, dadurch gekennzeichnet, daß der Kühlkreislauf durch Anordnungen von Ventilen (2, 3, 4) auftrennbar ist.


3. Verbrennungskraftmaschine nach Anspruch 2, dadurch gekennzeichnet, daß die Ventile (2, 3, 4) als Elektro-Ventile ausgebildet und unmittelbar beim Motor angeordnet sind und dieser vom übrigen Kühlmittelkreislauf hermetisch abtrennbar ist.

- 2 -

4. Verbrennungskraftmaschine nach Anspruch 1, 2 oder 3, dadurch gekennzeichnet, daß die Entladung des als Latentwärmespeicher dienenden Kühlmittels im Motorgehäuse 1 mittels einer am Motorgehäuse angeordneten Impfeinrichtung (12) erfolgt.

5. Verbrennungskraftmaschine nach einem der Ansprüche 1 bis 4, dadurch gekennzeichnet, daß ein Vorlaufventil (2) und ein Rücklaufventil (3) als Steuerglieder, ein Kühlmittelregler (5) als Regelglied des Hauptkühlkreislaufes dienen.

6. Verbrennungskraftmaschine nach einem oder mehreren der vorhergehenden Ansprüche 1 bis 5, dadurch gekennzeichnet, daß ein weiteres Vorlaufventil (4) zur Versorgung von weiteren von Kühlmittel durchströmten Aggregaten (8, 9, 10) vorgesehen ist (Sekundärkreislauf).

7. Verbrennungskraftmaschine nach einem oder mehreren der vorhergehenden Ansprüche 1 bis 6, dadurch gekennzeichnet, daß als Kühlmittel Natrium-Acetat-Trihydrat mit ca. 10 bis 25 Gew.-% Wasser Verwendung findet.

8. Verbrennungskraftmaschine nach Anspruch 2 oder 3, dadurch gekennzeichnet, daß die Ventile (2, 3, 4) derart am Motor angeordnet sind, daß sie durch Motorabwärme auf eine Temperatur über dem Schmelzpunkt des Wärmespeichermittels aufheizbar sind.

9. Verbrennungskraftmaschine nach einem oder mehreren der vorhergehenden Ansprüche 1 bis 8, dadurch gekennzeichnet, daß das Kühlsystem versiegelbar ist.

10. Verfahren zur Kühlung einer Verbrennungskraftmaschine, dadurch gekennzeichnet, daß beim Startvorgang zur hermetischen Abtrennung des Motors vom übrigen Kühlkreislauf die Steuerventile (2, 3, 4) geschlossen sind, daß das unterkühlte Wärmespeichermittel gleichzeitig als Kühlmittel dient und im Motor (1) mittels einer Impfeinrichtung (12) unter Wärmeabgabe entladen wird und daß die Steuerventile (2, 3, 4) nach deutlicher Überschreitung der Schmelztemperatur des Wärmespeichermittels geöffnet werden, unter Bildung eines herkömmlichen Kühlkreislaufes.

0016244

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.3) |
|---|---|---|---|
| X | DE - A1 - 2 635 632 (REINHARD) <br><br> * Ansprüche 4, 11; Seite 3, Zeile 20 bis Seite 4, Zeile 1; Seite 4, Zeilen 20 bis 23 * <br><br> --- | 1,10 | F 01 P 3/20 <br> F 28 F 23/00 |
| X | DE - A1 - 2 448 739 (ROETHER et al.) <br><br> * Seite 1 bis Seite 2, Absatz 4; Seite 3 * <br><br> --- | 1,4,7, 10 | |
| A | DE - A1 - 2 619 514 (WERDING) <br><br> * Seite 7, Zeile 30 bis Seite 8, Absatz 2 * <br><br> --- | | RECHERCHIERTE SACHGEBIETE (Int. Cl.3) <br><br> C 09 K 5/00 <br> F 01 P 3/00 |
| A | DE - U - 7 435 061 (KOTULLA) <br><br> * Seiten 2 bis 4; Fig. * <br><br> --- | | F 01 P 9/00 <br> F 02 G 5/00 <br> F 28 D 13/00 |
| A | FR - A - 972 189 (J.B.PIERCE FOUNDA-TION) <br><br> * Spalte 1 * <br><br> ----- | | F 28 D 17/00 <br> F 28 F 23/00 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 20-05-1980 | STÖCKLE |